# EUROPÄISCHE PATENTSCHRIFT

(11) **EP 2 978 108 B1**
(45) Veröffentlichungstag und Bekanntmachung des Hinweises auf die Patenterteilung: **23.08.2017**
(21) Anmeldenummer: 15166570.0
(22) Anmeldetag: 06.05.2015
(51) Int. Cl.: H02K 5/20, H02K 9/19

(54) **KÜHLMANTEL FÜR EINE ELEKTRISCHE MASCHINE UND VERFAHREN ZUR MONTAGE DES KÜHLMANTELS SOWIE EINE MIT EINEM KÜHLMANTEL AUSGESTATTETE ELEKTRISCHE MASCHINE**
COOLING JACKET FOR AN ELECTRIC MACHINE AND METHOD OF ASSEMBLING THE JACKET AND AN ELECTRIC MACHINE EQUIPPED WITH A COOLING JACKET
CHEMISE RÉFRIGÉRANTE POUR UNE MACHINE ÉLECTRIQUE ET PROCÉDÉ DE MONTAGE DE LA CHEMISE RÉFRIGÉRANTE ET MACHINE ÉLECTRIQUE ÉQUIPÉE D'UNE CHEMISE RÉFRIGÉRANTE

(30) Priorität: 25.07.2014 DE 102014214724
(43) Veröffentlichungstag der Anmeldung: 27.01.2016
(73) Patentinhaber: Volkswagen Aktiengesellschaft, 38440 Wolfsburg (DE)
(72) Erfinder: Estorf, Dr. Malte, 38162 Cremlingen (DE); Tousen, Jonas, 38106 Braunschweig (DE); Lück, Peter, 38550 Isenbüttel (DE); Pundt, Mirko, 38547 Calberlah (DE)

(56) Entgegenhaltungen:
- DE-A1- 19 624 519
- DE-A1-102012 016 208
- DE-A1-102012 023 050
- DE-A1-102012 205 754

## Beschreibung

Die Erfindung betrifft einen Kühlmantel für eine elektrische Maschine, mit einer Innenschale und einer Außenschale und einem sich zwischen der Innenschale und der Außenschale erstreckenden und von einem Kühlmittel durchströmbaren Kühlraum, wobei die Innenschale und die Außenschale durch zumindest eine stoffschlüssige Verbindung verbunden sind und der Kühlraum durch die stoffschlüssige Verbindung hermetisch abgedichtet ist. Weiterhin betrifft die Erfindung ein Verfahren zur Montage eines Kühlmantels für eine elektrische Maschine und eine mit einem Kühlmantel ausgestattete elektrische Maschine.

Elektrische Maschinen werden als Motor oder Generator in vielen technischen Bereichen eingesetzt, weisen zumeist einen ruhenden Stator bzw. Ständer sowie einen drehbar gelagerten Rotor bzw. Läufer auf und produzieren im Betrieb Abwärme, welche die Effizienz und Lebensdauer der elektrischen Maschine erheblich einschränken kann.

Insbesondere elektrische Maschinen hoher Leistungsdichte benötigen eine Kühlung, welche entweder mit Luft oder mit einem Kühlmittel realisiert ist. Eine Kühlung mit Luft erfordert zur effektiven Abführung der in der elektrischen Maschine entstehenden Abwärme große Flächen, wodurch die Gehäuse eine entsprechende Größe aufweisen müssen.

Elektrische Antriebe, die beispielsweise in einem Kraftfahrzeug oder einem Schienenfahrzeug zu dessen elektrischem Fahrbetrieb eingesetzt werden, müssen jedoch zur Optimierung des zur Verfügung stehenden Bauraumes möglichst kompakt ausgeführt sein. Eine Luftkühlung scheidet deshalb für derartige elektrische Antriebe in der Regel aus.

Zur Leistungssteigerung und aktiven Kühlung von derartigen elektrischen Maschinen werden insbesondere flüssigkeitsdurchströmte Kühlmäntel eingesetzt. Die bisher bekannten Kühllösungen für elektrische Maschinen beruhen auf Durchströmungen eines Kühlmantels bzw. einer Kühlleitung mit einem flüssigen Kühlmittel. Das Kühlmittel entzieht dabei der elektrischen Maschine die Abwärme, sodass ein störungsfreier Betrieb auf hohem Leistungsniveau gewährleistet werden kann. Als Kühlmittel wird üblicherweise ein Gemisch aus Wasser und Glykol oder Öl oder eine andere geeignete Kühlflüssigkeit verwendet.

Der Kühlmantel ist doppelwandig aus einer Innenschale und einer Außenschale aufgebaut, sodass ein als Ringspalt ausgebildeter Kühlraum von dem Kühlmittel durchströmt werden kann. Es ist auch bereits bekannt, in dem Ringspalt mehrere Kühlkanäle vorzusehen, die für eine definierte Strömung des Kühlmittels sorgen, um so den Wärmeabtransport zu optimieren.

Aus der EP 1 953 897 A2 ist bereits ein aus einer Innenschale und einer Außenschale bestehender Kühlmantel für eine elektrische Maschine bekannt. Zwischen der Innenschale und der Außenschale erstreckt sich ein von einem Kühlmittel durchströmbarer Kühlraum. Die Innenschale und die Außenschale bestehen beide aus Aluminium oder einer Aluminiumlegierung und sind durch eine als Schweißverbindung ausgebildete stoffschlüssige Verbindung miteinander verbunden. Durch die Schweißverbindung wird außerdem der ringförmige Kühlraum zwischen der Innenschale und der Außenschale hermetisch abgedichtet.

Als nachteilig erweist es sich, dass beim Schweißen eine ausreichende Zugängigkeit der Verbindungsstelle vorgesehen sein muss. Außerdem ergibt sich durch den Schweißprozess ein erhöhter Montage- und Zeitaufwand. Weiterhin werden beim Schweißen Temperaturspitzen in der Innenschale und der Außenschale verursacht, welche zu nachteiligen Veränderungen des Werkstoffgefüges führen können.

Die DE 10 2012 016 208 A1 beschreibt ebenfalls bereits einen Kühlmantel für eine elektrische Maschine mit einem zwischen einer Außenschale und einer Innenschale angeordneten Kühlraum.

Aus der DE 196 24 519 A1 ist ein Kühlmantel mit einem Innenteil sowie einem Außenteil bekannt, die koaxial zueinander angeordnet sind. Zwischen dem Innenteil und dem Außenteil ist mindestens ein Kühlmittelkanal ausgebildet. Das Außenteil weist zwei ringförmige Nasen auf, die in entsprechende Ringnuten des Innenteils eingreifen und mit diesen verklebt sind. Die Herstellung sowie Montage von Innenteil und Außenteil ist sehr aufwendig und erfordert eine hohe Genauigkeit.

Die DE 10 2012 016 208 A1 offenbart ein Gehäuse mit einem Kühlmantel. Der Kühlmantel weist ein Innenteil und ein Außenteil auf, die koaxial zueinander angeordnet sind. Zwischen dem Innenteil und dem Außenteil ist mindestens ein Kühlmittelkanal ausgebildet. Endbereiche des Innenteils weisen eine Ringnut zur Aufnahme eines Dichtrings auf. Eine axiale Sicherung von Innenteil und Außenteil erfolgt über einen Deckel, der mit dem Außenteil sowie seinem Halteelement zum axialen Halten des Innenteils verschraubt ist. Ein derartiges Gehäuse ist sehr aufwendig herzustellen und zu montieren. DE 10 2012 023 050 A1 offenbart zwischen der Innenschale und der Außenschale eine konusförmige Zentrieroberfläche, eine Verbindungsoberfläche und eine Dichtungsoberfläche, wobei alle drei Oberflächen separat ausgeführt sind. Außerdem ist es im Stand der Technik bereits bekannt, die Verbindung der Innenschale mit der Außenschale des Kühlmantels durch Schraubverbindungen zu realisieren.

Vor diesem Hintergrund liegt der Erfindung die Aufgabe zugrunde, einen Kühlmantel zu schaffen, durch welchen der Montageaufwand sowie die Montagezeit reduziert werden, sowie ein Verfahren zur Montage eines Kühlmantels zur Verfügung zu stellen. Eine weitere Aufgabe besteht darin, eine mit einem solchen Kühlmantel ausgestattete elektrische Maschine zur Verfügung zu stellen, durch welche ein zuverlässiger Betrieb gewährleistet und die Herstellung vereinfacht wird.

Die erstgenannte Aufgabe wird gelöst mit einem Kühlmantel gemäß den Merkmalen des Patentanspruches 1. Die Unteransprüche 2 bis 5 betreffen besonders zweckmäßige Weiterbildungen des erfindungsgemäßen Kühlmantels.

Erfindungsgemäß ist also ein Kühlmantel für eine elektrische Maschine vorgesehen, bei welchem die zumindest eine stoffschlüssige Verbindung zwischen der Innenschale und der Außenschale als Klebeverbindung ausgebildet ist. Dabei umfasst die Klebeverbindung eine Klebefläche der Innenschale, eine Klebefläche der Außenschale und eine zwischen den Klebeflächen angeordnete Klebeschicht aus einem Klebstoff. Dabei verbindet der Klebstoff die beiden Fügepartner, nämlich die Innenschale und die Außenschale, durch Adhäsion und Kohäsion. Ferner bilden eine Klebefläche der Innenschale und eine Klebefläche der Außenschale eine Konusverbindung, wobei die Klebefläche der Innenschale als Innenkonus und eine zugeordnete Klebefläche der Außenschale als Außenkonus ausgebildet ist. Hierdurch werden die Innenschale und die Außenschale derart zentriert, dass die Schalen koaxial zueinander angeordnet sind und sich zwischen den Schalen der Kühlraum ausbildet. Außerdem werden durch die bei einer Konusverbindung auftretenden Normalkräfte die den Klebstoff zwischen sich aufnehmenden Klebeflächeri der Innen- und Außenschale mit einem definierten Druck gegeneinander gepresst, sodass während des Aushärtens des Klebstoffes keine zusätzlichen Druck- oder Haltekräfte in die Klebeflächen eingeleitet werden müssen.

Durch das Kleben ist eine uneingeschränkte Zugängigkeit des Verbindungsbereiches, wie sie beispielsweise beim Schweißen erforderlich ist, nicht zwingend. Die Klebeverbindung kann also auch in einem von außen nicht zugängigen Abschnitt insbesondere auch verdeckt zwischen der Innenschale und der Außenschale erzeugt werden, sodass der Verbindungsbereich von außen nicht sichtbar ist und dadurch das optische Erscheinungsbild des Kühlmantels nicht verändert wird. Der apparative Aufwand zur Herstellung der Klebeverbindung ist im Vergleich zu der Schweißverbindung wesentlich geringer.

Durch die Klebeverbindung ergibt sich sowohl bei statischer als auch bei dynamischer Belastung der Bauteile eine gleichmäßige Spannungsverteilung und Kraftübertragung über die gesamte Klebefläche. Bei Verschraubungen dagegen entstehen Spannungsspitzen an den Verbindungselementen, während der Raum dazwischen nur unwesentlich zur Kraftübertragung beiträgt. Ebenso wird beim Schrauben die sichtbare Oberfläche verändert, während die Oberfläche beim Kleben unverändert bleibt.

Weiterhin werden beim Kleben keine hohen Temperaturen in die Verbindungspartner eingeleitet, sodass Verzug, Abkühlspannungen oder Gefügeveränderung der Verbindungspartner, wie sie beim Schweißen üblich sind, nicht entstehen. Durch die Elastizität des Klebstoffes ist die Schwingungsdämpfung bei der erfindungsgemäßen Klebeverbindung besser als bei einer Schweiß- oder Schraubverbindung.

Durch die Ausgestaltung der stoffschlüssigen Verbindung als Klebeverbindung können Werkstoffe bzw. Werkstoffpaarungen gefügt werden, welche einem thermischen Fügeverfahren nicht zugänglich sind. Auch Verbindungen zwischen artfremden Werkstoffen, beispielsweise zwischen Aluminium und Kunststoff, lassen sich problemlos realisieren. Hierdurch ergibt sich eine Optimierung des Leichtbaupotentials. Weiterhin wird durch eine elektrische und thermische Isolation durch den Klebstoff die Bildung von Lokalelementen und die damit verbundene Kontakt-Korrosion bei einer metallischen Innenschale und einer metallischen Außenschale verhindert.

Zusammenfassend ergibt sich, dass nach dem Auftragen des Klebstoffes auf die Verbindungspartner und dem Einschieben der Innenschale in die Außenschale der Montagevorgang an sich abgeschlossen ist. Hieraus resultierend ergibt sich eine erhebliche Reduzierung des Montageaufwandes und der Montagezeit. Außerdem übernimmt die Klebeverbindung neben der Kraftübertragung zwischen der Innenschale und der Außenschale auch eine den Kühlraum druckdicht und auslaufsicher abdichtende Dichtfunktion.

In einer vorteilhaften Weiterbildung der Erfindung ist vorgesehen, dass die Klebeverbindung umlaufend ausgebildet ist. Durch die den Kühlmantel umlaufend umschließende Klebeverbindung erfolgt einerseits eine gleichmäßige Kraftübertragung über die gesamte Klebefläche und andererseits wird gewährleistet, dass die Klebeverbindung den Kühlmantel über den gesamten Umfang flüssigkeitsdicht abdichtet.

Weiterhin erweist es sich als besonders vorteilhaft, dass zumindest zwei Klebeverbindungen zwischen der Innenschale und der Außenschale vorgesehen sind, wobei sich der Kühlraum in axialer Richtung zwischen den beiden Klebeverbindungen erstreckt. Hierdurch ist der Kühlraum durch die beiden dichtenden Klebeverbindungen über den gesamten Umfang hermetisch abgedichtet, sodass ein Austreten von Kühlflüssigkeit wirksam verhindert werden kann. Hierdurch wird die Betriebssicherheit der elektrischen Maschine optimiert.

Eine Verbesserung des Leichtbaupotentials wird auch dadurch erreicht, dass die Außenschale aus Kunststoff oder aus Aluminium besteht. Hierdurch ergibt sich gegenüber Außenschalen aus Stahl eine erhebliche Gewichtseinsparung. Hierbei können die Außenschale und die Innenschale aus demselben Material bestehen. Es ist jedoch auch denkbar, einen Kühlmantel in Mischbauweise herzustellen, bei welchem sich das Material der Innenschale von dem Material der Außenschale unterscheidet.

Eine weitere Optimierung des Montageaufwandes und der Montagezeit wird auch dadurch erreicht, dass ein für die Aufnahme der elektrischen Maschine vorgesehener Innenraum radial durch die Innenschale und axial durch zwei Lagerschilde begrenzt ist, wobei die Innenschale mit einem ersten Lagerschild und die Außenschale mit einem zweiten Lagerschild einstückig verbunden ist. Hierdurch besteht der Kühlmantel aus nur zwei Teilen, sodass eine einfache und schnelle Montage des Kühlmantels gewährleistet ist.

Die zweitgenannte Aufgabe, nämlich ein Verfahren zur Montage eines Kühlmantels für eine elektrische Maschine zur Verfügung zu stellen, wird gelöst mit einem Verfahren gemäß den Merkmalen des Patentanspruches 7. Die Unteransprüche 8 und 9 betreffen besonders zweckmäßige Weiterbildungen des Verfahrens.

Erfindungsgemäß ist also ein Verfahren zur Montage eines Kühlmantels für eine elektrische Maschine vorgesehen, welcher eine Innenschale und eine Außenschale und einen sich zwischen der Innenschale und der Außenschale erstreckenden und von einem Kühlmittel durchströmbaren Kühlraum aufweist, bei welchem zunächst
- ein Klebstoff auf zumindest eine Klebefläche der Innenschale und/oder zumindest eine Klebefläche der Außenschale aufgetragen wird und anschließend
- die Innenschale mit einem der Außenschale zugewandten Einführabschnitt in eine von der Außenschale begrenzte Einführöffnung eingeführt wird und
- die Innenschale und die Außenschale durch eine Relativbewegung in eine Montagestellung bewegt werden, in welcher die Innenschale und die Außenschale koaxial angeordnet sind und die Außenschale die Innenschale derart umschließt, dass sich der Kühlraum zwischen der Innenschale und der Außenschale ausbildet, und in welcher sich zwischen
- der Klebefläche der Innenschale und einer gegenüberliegenden Klebefläche der Außenschale und/oder zwischen der Klebefläche der Außenschale und einer gegenüberliegenden Klebefläche der Innenschale eine Klebeverbindung ausbildet, welche
- die Außenschale und die Innenschale stoffschlüssig miteinander verbindet und den Kühlraum hermetisch abdichtet.

Weiterhin ist vorgesehen, dass sich während der Relativbewegung zwischen der Innenschale und der Außenschale eine Konusverbindung zwischen der einen Innenkonus bildenden Klebefläche der Innenschale und der einen Außenkonus bildenden Klebefläche der Außenschale ausbildet, durch welche die beiden den Klebstoff zwischen sich aufnehmenden Klebeflächen der Innenschale und der Außenschale gegeneinander gedrückt werden. Durch die Fügebewegung werden die Innenschale und die Außenschale selbsttätig zentriert, sodass diese koaxial angeordnet werden und sich der Kühlraum zwischen der Innenschale und der Außenschale ausbildet. Die Konusverbindung erzeugt außerdem gegeneinander gerichtete Druckkräfte, welche die den Klebstoff zwischen sich aufnehmenden Klebeflächen während der Aushärtung des Klebstoffes zusammenpressen. Hierdurch kann auch ohne extern eingeleitete Druckkräfte eine prozesssichere Verklebung gewährleistet und die Montagezeit zusätzlich weiter reduziert werden.

Durch das genannte Verfahren wird eine einfache und problemlose Montage des Kühlmantels ermöglicht. Beim eingangs angeführten Stand der Technik werden die Innenschale und die Außenschale zunächst in einem Montagevorgang koaxial angeordnet und anschließend durch Schweißen miteinander verbunden. Bei dem erfindungsgemäßen Verfahren sind nach dem Montagevorgang keine nachgeschalteten Arbeitsschritte zur Herstellung der stoffschlüssigen Verbindung erforderlich. Hierdurch kann der Zeitaufwand zur Montage des Kühlmantels gegenüber dem aus dem Stand der Technik bekannten Verfahren erheblich reduziert werden. Außerdem ist eine Zugängigkeit der Verbindungsstelle nicht erforderlich, sodass die Klebeverbindungen an Stellen positioniert werden können, welche beim Schweißen nicht nutzbar sind. In vorteilhafter Weise werden die Klebeverbindungen in einem von außen nicht sichtbaren bzw. verdeckten Bereich zwischen der Innenschale und der Außenschale positioniert, sodass die Klebeverbindung auch vor äußeren und die Lebensdauer der Klebenaht beeinflussenden Einflüssen geschützt ist.

Eine besonders vorteilhafte Ausgestaltung des erfindungsgemäßen Verfahrens wird auch dadurch geschaffen, dass der Klebstoff ausschließlich auf die Klebefläche der Innenschale aufgetragen wird, welche in einem dem Einführabschnitt abgewandten Endabschnitt der Innenschale angeordnet ist, und auf die Klebefläche der Außenschale, welche in einem der Einführöffnung abgewandten Endabschnitt der Außenschale angeordnet ist. Hierdurch wird gewährleistet, dass der Klebstoff bei der Fügebewegung bzw. bei der Relativbewegung der Innenschale und der Außenschale erst in der Endphase der Fügebewegung in Kontakt mit der jeweils gegenüberliegenden Fläche der Innenschale bzw. der Außenschale kommt. Eine Wulstbildung des Klebstoffes beim Einschieben der Innenschale in die Außenschale kann hierdurch verhindert werden. Außerdem wird ein Verkleben des den Kühlraum begrenzenden Bereiches der Innenschale oder der Außenschale durch Klebstoff ausgeschlossen und dadurch eine betriebssichere Funktion bzw. Kühlung der elektrischen Maschine gewährleistet.

Die drittgenannte Aufgabe wird erfindungsgemäß durch eine mit einem Kühlmantel nach zumindest einem der Ansprüche 1 bis 6 ausgestattete elektrische Maschine gelöst, bei welcher die zumindest eine stoffschlüssige Verbindung zwischen der Innenschale und der Außenschale des Kühlmantels als Klebeverbindung ausgebildet ist. Hierdurch wird ein zuverlässiger Betrieb gewährleistet und eine einfache und problemlose Montage ermöglicht.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine perspektivische Darstellung einer elektrischen Maschine mit einem Kühlmantel;
- Fig. 2: einen aus einer Innenschale und einer Außenschale bestehenden Kühlmantel in einer geschnittenen Seitenansicht;
- Fig. 3: eine perspektivische Darstellung einer Innenschale;
- Fig. 4: eine perspektivische und geschnittene Darstellung einer Innenschale und einer Außenschale unmittelbar vor der Montage zu einem Kühlmantel;
- Fig. 5: eine perspektivische und geschnittene Darstellung eines montierten Kühlmantels;
- Fig. 6: eine Innenschale und eine Außenschale mit konisch ausgebildeten Klebeflächen unmittelbar vor der Montage;
- Fig. 7: eine Darstellung einer Konusverbindung zwischen den Klebeflächen der Innenschale und der Außenschale.

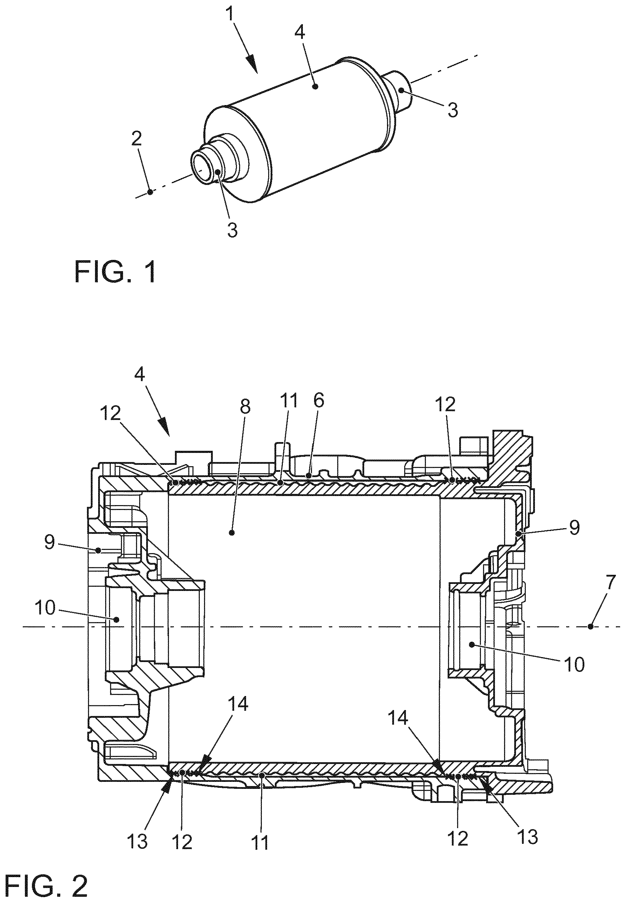

Figur 1 zeigt eine perspektivische Darstellung einer elektrischen Maschine 1, welche einen nicht weiter dargestellten Stator und einen ebenfalls nicht dargestellten und um eine Drehachse 2 drehbar gelagerten Rotor umfasst. Der Rotor ist mit einer Welle 3 verbunden. Zur Kühlung der elektrischen Maschine 1 ist ein den Stator umschließender Kühlmantel 4 vorgesehen.

Der zur Kühlung der elektrischen Maschine 1 dienende und als Hülse ausgebildete Kühlmantel 4 wird nachstehend anhand der Figur 2 näher erläutert. Dieser besteht aus einer auch als Statorträger bezeichneten zylindrischen Innenschale 5 und einer ebenfalls zylindrisch ausgebildeten und konzentrisch angeordneten Außenschale 6, welche die Innenschale 5 zumindest abschnittsweise umschließt. Eine Mittellängsachse 7 des Kühlmantels 4 ist dabei koaxial zu der Drehachse 2 des Rotors bzw. der Welle 3 angeordnet. Ein zur Aufnahme des Stators vorgesehener Innenraum 8 des Kühlmantels 4 wird radial durch die Innenschale 5 bzw. die Außenschale 6 und axial durch zwei Lagerschilde 9 begrenzt, wobei jeweils ein Lagerschild 9 einstückig mit der Innenschale 5 bzw. der Außenschale 6 verbunden ist. Zur Aufnahme bzw. Lagerung der Welle 3 weisen die Lagerschilde 9 jeweils eine Durchbrechung 10 auf.

Die Außenschale 6 und die Innenschale 5 schließen einen von einem Kühlmittel durchströmbaren und als Ringspalt ausgebildeten Kühlraum 11 ein. Durch zwei umlaufende und als Klebeverbindung 12 ausgebildete stoffschlüssige Verbindungen sind die Innenschale 5 und die Außenschale 6 fest miteinander verbunden. Die beiden Klebeverbindungen 12 sind dabei beidseitig des Kühlraumes 11 angeordnet und begrenzen diesen in axialer Richtung, sodass der Kühlraum 11 durch die Klebeverbindungen 12 hermetisch abgedichtet ist. Im Bereich der Klebeverbindungen 12 sind Klebeflächen 13 der Innenschale 5 mit entsprechenden Klebeflächen 14 der Außenschale 6 durch einen ausgehärteten Klebstoff stoffschlüssig verbunden.

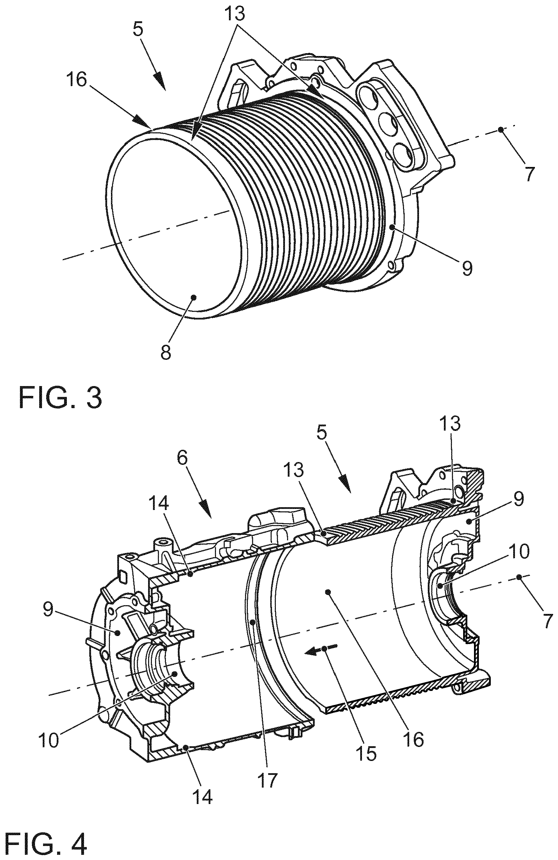

Anhand der Figuren 3 bis 7 wird nachfolgend das Verfahren zur Herstellung bzw. zur Montage des aus der Innenschale 5 und der Außenschale 6 bestehenden Kühlmantels 4 beschrieben. Hierbei wird zunächst ein Klebstoff auf die Klebeflächen 13 der Innenschale 5 und/oder die Klebeflächen 14 der Außenschale 6 aufgetragen. Anschließend wird die Innenschale 5 in einer Fügerichtung 15 relativ zu der Außenschale 6 bewegt, sodass zunächst ein Einführabschnitt 16 der Innenschale 5 in eine von der Außenschale 6 begrenzte Einführöffnung 17 eingeführt wird.

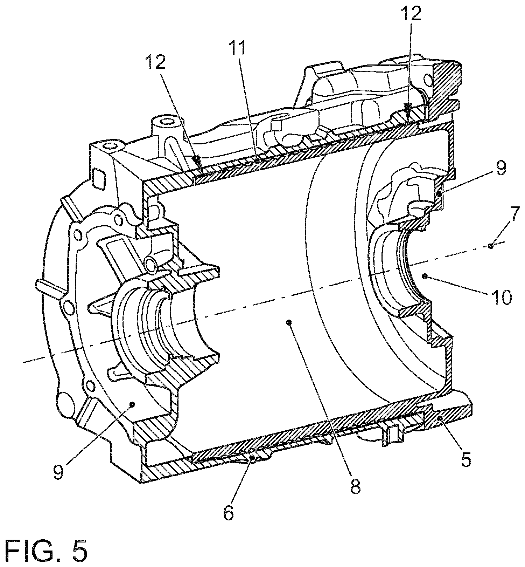

Durch eine fortschreitende Bewegung der Innenschale 5 in Fügerichtung 15 wird die Innenschale 5 dann in die in der Figur 5 dargestellten Montagestellung angeordnet. In dieser Montagestellung umschließt die Außenschale 6 die Innenschale 5 unter Ausbildung des Kühlraumes 11 und die Klebeflächen 13 der Innenschale 5 und die Klebeflächen 14 der Außenschale 6 sind den Klebstoff zwischen sich aufnehmend einander gegenüberliegend angeordnet. Durch ein nachfolgendes Aushärten des Klebstoffes sind die Innenschale 5 und Außenschale 6 dann fest und stoffschlüssig miteinander verbunden und der Kühlraum 11 ist durch die Klebeverbindungen 12 flüssigkeitsdicht abgedichtet.

In vorteilhafter Weise wird der Klebstoff ausschließlich auf die dem Einführabschnitt 16 abgewandte Klebefläche 13 der Innenschale 5 und auf eine der Einführöffnung 17 abgewandte Klebefläche 14 der Außenschale 6 aufgetragen. Hierdurch kommt der Klebstoff erst in der Endphase der Fügebewegung in Kontakt mit den jeweils gegenüberliegenden Flächen der Innenschale 5 bzw. der Außenschale 6, sodass eine Wulstbildung des Klebstoffes bzw. ein Verkleben der den Kühlraum 11 begrenzenden Flächen der Innenschale 5 und der Außenschale 6 ausgeschlossen ist.

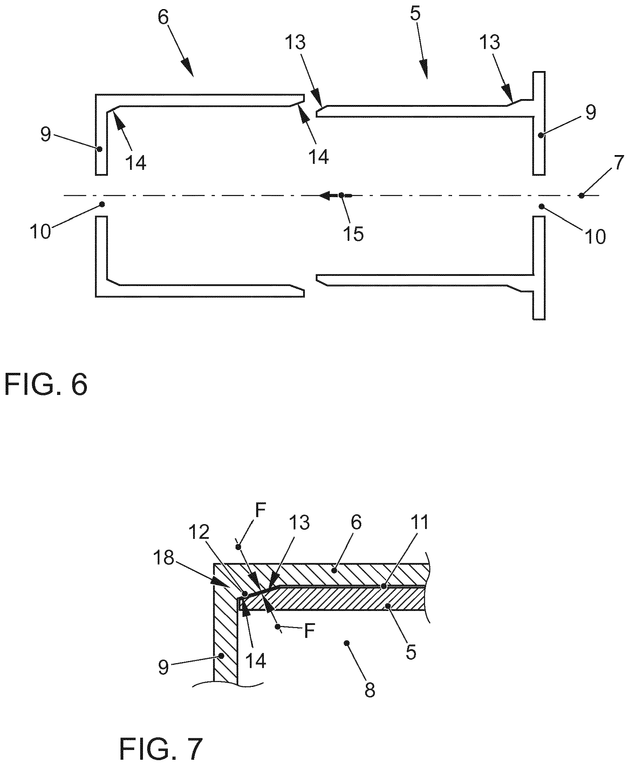

Die Figuren 6 und 7 zeigen eine andere Ausführungsform des Kühlmantels 4, bei welcher die Klebeflächen 13, 14 in der in Figur 7 dargestellten Montagestellung eine Konusverbindung 18 bilden. Hierdurch werden die den Klebstoff zwischen sich aufnehmenden Klebeflächen 13 der Innenschale 5 und die Klebeflächen 14 der Außenschale 6 selbsttätig mit einer Druckkraft F gegeneinander gedrückt, sodass keine externe Druckkraft auf die Klebeflächen 13, 14 ausgeübt werden muss, um eine betriebssichere, feste und flüssigkeitsdichte Klebeverbindung 12 zwischen der Innenschale 5 und der Außenschale 6 zu gewährleisten. Hierbei sind die Klebeflächen 13 der Innenschale 5 zumindest abschnittsweise als Innenkonus und die Klebeflächen 14 der Außenschale 6 zumindest abschnittsweise als Außenkonus ausgebildet. Beim Fügevorgang, also bei einer Bewegung der Innenschale 5 in Richtung der Außenschale 6, taucht der Innenkonus in den Außenkonus ein und es bildet sich selbsttätig die in Figur 7 dargestellte Konusverbindung 18 aus. Durch die Konusverbindung 18 wird auch eine Zentrierung der Innenschale 5 und der Außenschale 6 erreicht.

### Bezugszeichenliste

- 1: elektrische Maschine
- 2: Drehachse
- 3: Welle
- 4: Kühlmantel
- 5: Innenschale

- 6: Außenschale
- 7: Mittellängsachse
- 8: Innenraum
- 9: Lagerschild
- 10: Durchbrechung

- 11: Kühlraum
- 12: Klebeverbindung
- 13: Klebefläche Innenschale
- 14: Klebefläche Außenschale
- 15: Fügerichtung

- 16: Einführabschnitt
- 17: Einführöffnung
- 18: Konusverbindung

## Patentansprüche

1. Kühlmantel (4) für eine elektrische Maschine (1), mit einer Innenschale (5) und einer Außenschale (6) und einem sich zwischen der Innenschale (5) und der Außenschale (6) erstreckenden und von einem Kühlmittel durchströmbaren Kühlraum (11), wobei die Innenschale (5) und die Außenschale (6) durch zumindest eine stoffschlüssige Verbindung verbunden sind und der Kühlraum (11) durch die stoffschlüssige Verbindung hermetisch abgedichtet ist, **dadurch gekennzeichnet, dass** die zumindest eine stoffschlüssige Verbindung zwischen der Innenschale (5) und der Außenschale (6) als Klebeverbindung (12) ausgebildet ist, wobei eine Klebefläche (13) der Innenschale (5) und eine Klebefläche (14) der Außenschale (6) eine Konusverbindung (18) bilden, wobei die Klebefläche (13) der Innenschale (5) zumindest abschnittsweise als Innenkonus und eine zugeordnete Klebefläche (14) der Außenschale (6) zumindest abschnittsweise als Außenkonus ausgebildet ist, wobei durch die Konusverbindung (18) auch eine Zentrierung der Innenschale (5) und der Außenschale (6) erreicht wird.

2. Kühlmantel (4) nach Anspruch 1, **dadurch gekennzeichnet, dass** die Klebeverbindung (12) umlaufend ausgebildet ist.

3. Kühlmantel (4) nach den Ansprüchen 1 oder 2, **dadurch gekennzeichnet, dass** zumindest zwei Klebeverbindungen (12) zwischen der Innenschale (5) und der Außenschale (6) vorgesehen sind, wobei sich der Kühlraum (11) in axialer Richtung zwischen den beiden Klebeverbindungen (12) erstreckt.

4. Kühlmantel (4) nach zumindest einem der vorangehenden Ansprüche, **dadurch gekennzeichnet, dass** die Außenschale (6) aus Kunststoff oder aus Aluminium besteht.

5. Kühlmantel (4) nach zumindest einem der vorangehenden Ansprüche, **dadurch gekennzeichnet, dass** ein für die Aufnahme der elektrischen Maschine (1) vorgesehener Innenraum (8) des Kühlmantels (4) radial durch die Innenschale (5) und/oder die Außenschale (6) und axial durch zwei Lagerschilde (9) begrenzt ist, wobei die Innenschale (5) mit einem ersten Lagerschild (9) und die Außenschale (6) mit einem zweiten Lagerschild (9) einstückig verbunden sind.

6. Verfahren zur Montage eines Kühlmantels (4) für eine elektrische Maschine (1), welcher eine Innenschale (5) und eine Außenschale (6) und einen sich zwischen der Innenschale (5) und der Außenschale (6) erstreckenden und von einem Kühlmittel durchströmbaren Kühlraum (11) aufweist, bei welchem zunächst
• ein Klebstoff auf zumindest eine Klebefläche (13) der Innenschale (5) und/oder zumindest eine Klebefläche (14) der Außenschale (6) aufgetragen wird und anschließend
• die Innenschale (5) mit einem der Außenschale (6) zugewandten Einführabschnitt (16) in eine von der Außenschale (6) begrenzte Einführöffnung (17) eingeführt und
• die Innenschale (5) und die Außenschale (6) durch eine Relativbewegung in eine Montagestellung bewegt werden, in welcher die Innenschale (5) und die Außenschale (6) koaxial angeordnet sind und die Außenschale (6) die Innenschale (5) derart umschließt, dass sich der Kühlraum (11) zwischen der Innenschale (5) und der Außenschale (6) ausbildet, und in welcher sich zwischen
• der Klebefläche (13) der Innenschale (5) und einer gegenüberliegenden zweiten Klebefläche (14) der Außenschale (6) und/oder zwischen der Klebefläche (14) der Außenschale und einer gegenüberliegenden zweiten Klebefläche (13) der Innenschale (5) eine Klebeverbindung (12) ausbildet, welche
• die Außenschale (6) und die Innenschale (5) stoffschlüssig miteinander verbindet und den Kühlraum (11) hermetisch abdichtet, wobei sich während der Relativbewegung zwischen der Innenschale (5) und der Außenschale (6) eine Konusverbindung (18) zwischen der einen Innenkonus bildenden Klebefläche (13) der Innenschale (5) und der einen Außenkonus bildenden Klebefläche (14) der Außenschale (6) ausbildet, durch welche die beiden den Klebstoff zwischen sich aufnehmenden Klebeflächen (13, 14) der Innenschale (5) und der Außenschale (6) gegeneinander gedrückt werden, wobei durch die Konusverbindung (18) auch eine Zentrierung der Innenschale (5) und der Außenschale (6) erreicht wird.

7. Verfahren nach Anspruch 6, **dadurch gekennzeichnet, dass** der Klebstoff ausschließlich auf die Klebefläche (13) der Innenschale (5) aufgetragen wird, welche in einem dem Einführabschnitt (16) abgewandten Endabschnitt der Innenschale (5) angeordnet ist, und auf die Klebefläche (14) der Außenschale (6), welche in einem der Einführöffnung (17) abgewandten Endabschnitt der Außenschale (6) angeordnet ist.

8. Eine mit einem Kühlmantel (4) nach zumindest einem der vorhergehenden Ansprüche ausgestattete elektrische Maschine (1), wobei der Kühlmantel (4) eine Innenschale (5) und eine Außenschale (6) sowie einen sich zwischen der Innenschale (5) und der Außenschale (6) erstreckenden und von einem Kühlmittel durchströmbaren Kühlraum (11) aufweist, die Innenschale (5) und die Außenschale (6) durch zumindest eine stoffschlüssige Verbindung verbunden sind und der Kühlraum (11) hermetisch abgedichtet ist, **dadurch gekennzeichnet, dass** die zumindest eine stoffschlüssige Verbindung zwischen der Innenschale (5) und der Außenschale (6) als Klebeverbindung (12) ausgebildet ist.

## Claims

1. Cooling jacket (4) for an electric machine (1), with an inner shell (5) and an outer shell (6) and a cooling chamber (11) which extends between the inner shell (5) and the outer shell (6) and through which a coolant can flow, wherein the inner shell (5) and the outer shell (6) are connected by at least one integrally bonded connection, and the cooling chamber (11) is hermetically sealed by the integrally bonded connection, **characterized in that** the at least one integrally bonded connection between the inner shell (5) and the outer shell (6) is designed as an adhesive connection (12), wherein an adhesive surface (13) of the inner shell (5) and an adhesive surface (14) of the outer shell (6) form a conical connection (18), wherein the adhesive surface (13) of the inner shell (5) is designed at least in sections as an internal cone and an associated adhesive surface (14) of the outer shell (6) is designed at least in sections an external cone, wherein centring of the inner shell (5) and the outer shell (6) is also achieved by the conical connection (18).

2. Cooling jacket (4) according to Claim 1, **characterized in that** the adhesive connection (12) is of encircling deign.

3. Cooling jacket (4) according to Claim 1 or 2, **characterized in that** at least two adhesive connections (12) are provided between the inner shell (5) and the outer shell (6), wherein the cooling chamber (11) extends in the axial direction between the two adhesive connections (12).

4. Cooling jacket (4) according to at least one of the preceding claims, **characterized in that** the outer shell (6) is composed of plastic or of aluminium.

5. Cooling jacket (4) according to at least one the preceding claims, **characterized in that** an interior (8) of the cooling jacket (4), said interior being provided for accommodating the electric machine (1), is bounded radially by the inner shell (5) and/or the outer shell (6) and axially by two end plates (9), wherein the inner shell (5) is integrally connected to a first end plate (9) and the outer shell (6) is integrally connected to a second end plate (9).

6. Method of assembling a cooling jacket (4) for an electric machine (1), said cooling jacket having an inner shell (5) and an outer shell (6) and a cooling chamber (11) which extends between the inner shell (5) and the outer shell (6) and through which a coolant can flow, in which first of all
• an adhesive is applied to at least one adhesive surface (13) of the inner shell (5) and/or to at least one adhesive surface (14) of the outer shell (6), and subsequently
• the inner shell (5) is inserted with an insertion portion (16) facing the outer shell (6) into an insertion opening (17) bounded by the outer shell (6) and
• the inner shell (5) and the outer shell (6) are moved by a relative movement into an assembly position in which the inner shell (5) and the outer shell (6) are arranged coaxially and the outer shell (6) surrounds the inner shell (5) in such a manner that the cooling chamber (11) is formed between the inner shell (5) and the outer shell (6), and in which
• an adhesive connection (12) is formed between the adhesive surface (13) of the inner shell (5) and an opposite second adhesive surface (14) of the outer shell (6) and/or between the adhesive surface (14) of the outer shell and an opposite second adhesive surface (13) of the inner shell (5), said adhesive connection
• connecting the outer shell (6) and the inner shell (5) to each other in an integrally bonded manner and hermetically sealing the cooling chamber (11), wherein, during the relative movement between the inner shell (5) and the outer shell (6), a conical connection (18) is formed between the internal-cone-forming adhesive surface (13) of the inner shell (5) and the external-cone-forming adhesive surface (14) of the outer shell (6), by means of which conical connection the two adhesive surfaces (13, 14) of the inner shell (5) and of the outer shell (6) receiving the adhesive between them are pressed against each other, wherein centring of the inner shell (5) and of the outer shell (6) is also achieved by the conical connection (18).

7. Method according to Claim 6, **characterized in that** the adhesive is supplied exclusively to the adhesive surface (13) of the inner shell (5), said adhesive surface being arranged in an end portion of the inner shell (5) facing away from the insertion portion (16), and to the adhesive surface (14) of the outer shell (6), said adhesive surface being arranged in an end portion of the outer shell (6) facing away from the insertion opening (17).

8. Electric machine (1) equipped with a cooling jacket (4) according to at least one of the preceding claims, wherein the cooling jacket (4) has an inner shell (5) and an outer shell (6) and also a cooling chamber (11) which extends between the inner shell (5) and the outer shell (6) and through which a coolant can flow, the inner shell (5) and the outer shell (6) are connected by at least one integrally bonded connection, and the cooling chamber (11) is hermetically sealed, **characterized in that** the at least one integrally bonded connection between the inner shell (5) and the outer shell (6) is designed as an adhesive connection (12) .

## Revendications

1. Chemise réfrigérante (4) pour une machine électrique (1), avec une enveloppe intérieure (5) et une enveloppe extérieure (6) et une chambre de refroidissement (11) s'étendant entre l'enveloppe intérieure (5) et l'enveloppe extérieure (6) et pouvant être parcourue par un fluide de refroidissement, dans laquelle l'enveloppe intérieure (5) et l'enveloppe extérieure (6) sont reliées par au moins une liaison matérielle et la chambre de refroidissement (11) est rendue hermétiquement étanche par la liaison matérielle, **caractérisée en ce que** ladite au moins une liaison matérielle entre l'enveloppe intérieure (5) et l'enveloppe extérieure (6) est réalisée sous la forme d'une liaison collée (12), dans laquelle une face de collage (13) de l'enveloppe intérieure (5) et une face de collage (14) de l'enveloppe extérieure (6) forment une liaison conique (18), dans laquelle la face de collage (13) de l'enveloppe intérieure (5) est réalisée au moins en partie sous la forme d'un cône intérieur et une face de collage associée (14) de l'enveloppe extérieure (6) est réalisée au moins en partie sous la forme d'un cône extérieur, dans laquelle on obtient également par la liaison conique (18) un centrage de l'enveloppe intérieure (5) et de l'enveloppe extérieure (6) .

2. Chemise réfrigérante (4) selon la revendication 1, **caractérisée en ce que** la liaison collée (12) est réalisée selon le pourtour.

3. Chemise réfrigérante (4) selon les revendications 1 ou 2, **caractérisée en ce qu'**il est prévu au moins deux liaisons collées (12) entre l'enveloppe intérieure (5) et l'enveloppe extérieure (6), dans laquelle la chambre de refroidissement (11) s'étend en direction axiale entre les deux liaisons collées (12).

4. Chemise réfrigérante (4) selon au moins une des revendications précédentes, **caractérisée en ce que** l'enveloppe extérieure (6) est constituée de matière plastique ou d'aluminium.

5. Chemise réfrigérante (4) selon au moins une des revendications précédentes, **caractérisée en ce qu'**une chambre intérieure (8) de la chemise réfrigérante (4) prévue pour le logement de la machine électrique (1) est limitée radialement par l'enveloppe intérieure (5) et/ou l'enveloppe extérieure (6) et axialement par deux flasques (9), dans laquelle l'enveloppe intérieure (5) est assemblée d'une pièce à une première flasque (9) et l'enveloppe extérieure (6) est assemblée d'une pièce à une deuxième flasque (9).

6. Procédé de montage d'une chemise réfrigérante (4) pour une machine électrique (1), qui présente une enveloppe intérieure (5) et une enveloppe extérieure (6) et une chambre de refroidissement (11) s'étendant entre l'enveloppe intérieure (5) et l'enveloppe extérieure (6) et pouvant être parcourue par un fluide de refroidissement, dans lequel d'abord
• on dépose une colle sur au moins une face de collage (13) de l'enveloppe intérieure (5) et/ou sur au moins une face de collage (14) de l'enveloppe extérieure (6), et ensuite
• on introduit l'enveloppe intérieure (5) avec une partie d'introduction (16) tournée vers l'enveloppe extérieure (6) dans une ouverture d'introduction (17) limitée par l'enveloppe extérieure (6), et
• on déplace l'enveloppe intérieure (5) et l'enveloppe extérieure (6) par un mouvement relatif dans une position de montage, dans laquelle l'enveloppe intérieure (5) et l'enveloppe extérieure (6) sont disposées de façon coaxiale, et l'enveloppe extérieure (6) entoure l'enveloppe intérieure (5), de telle manière que la chambre de refroidissement (11) se forme entre l'enveloppe intérieure (5) et l'enveloppe extérieure (6), et
• dans laquelle il se forme entre la face de collage (13) de l'enveloppe intérieure (5) et une deuxième face de collage opposée (14) de l'enveloppe extérieure (6) et/ou entre la face de collage (14) de l'enveloppe extérieure et une deuxième face de collage opposée (13) de l'enveloppe intérieure (5) une liaison collée (12),
• qui relie l'une à l'autre matériellement l'enveloppe extérieure (6) et l'enveloppe intérieure (5) et qui rend la chambre de refroidissement (11) hermétiquement étanche, dans lequel il se forme pendant le mouvement relatif entre l'enveloppe intérieure (5) et l'enveloppe extérieure (6) une liaison conique (18) entre la première face de collage (13) de l'enveloppe intérieur (5) formant un cône intérieur et la face de collage (14) de l'enveloppe extérieure (6) formant un cône extérieur, par laquelle les deux faces de collage (13, 14) de l'enveloppe intérieure (5) et de l'enveloppe extérieure (6) contenant entre elles la colle sont pressées l'une contre l'autre, dans lequel on obtient également par la liaison conique (18) un centrage de l'enveloppe intérieure (5) et de l'enveloppe extérieure (6) .

7. Procédé selon la revendication 6, **caractérisé en ce que** l'on dépose la colle exclusivement sur la face de collage (13) de l'enveloppe intérieure (5), qui est disposée dans une partie d'extrémité de l'enveloppe intérieure (5) située à l'opposé de la partie d'introduction (16), et sur la face de collage (14) de l'enveloppe extérieure (6), qui est disposée dans une partie d'extrémité de l'enveloppe extérieure (6) située à l'opposé de l'ouverture d'introduction (17).

8. Machine électrique (1) équipée d'une chemise réfrigérante (4) selon au moins une des revendications précédentes, dans laquelle la chemise réfrigérante (4) présente une enveloppe intérieure (5) et une enveloppe extérieure (6) ainsi qu'une chambre de refroidissement (11) s'étendant entre l'enveloppe intérieure (5) et l'enveloppe extérieure (6) et pouvant être parcourue par un fluide de refroidissement, l'enveloppe intérieure (5) et l'enveloppe extérieure (6) sont reliées par au moins une liaison matérielle et la chambre de refroidissement (11) est rendue hermétiquement étanche, **caractérisée en ce que** ladite au moins une liaison matérielle entre l'enveloppe intérieure (5) et l'enveloppe extérieure (6) est réalisée sous la forme d'une liaison collée (12).
